# EUROPEAN PATENT APPLICATION

(11) **EP 3 698 696 A1**
(43) Date of publication of application: **26.08.2020**
(21) Application number: 19158382.2
(22) Date of filing: 20.02.2019
(51) Int. Cl.: A47L 9/00, A47L 9/22

(54) **FAN AGGREGATE SUSPENSION**

(71) Applicant: Koninklijke Philips N.V., 5656 AG Eindhoven (NL)
(72) Inventor: VAN DEN BOSCH, Michael, 5656 AE Eindhoven (NL); KUIPER, Bernardus Lubbertus, 5656 AE Eindhoven (NL); TACK, Johannes Willem, 5656 AE Eindhoven (NL)
(74) Representative: Steenbeek, Leonardus Johannes

(57) **Abstract**

A housing (H) (e.g. a vacuum cleaner) comprises a fan aggregate having a part (P) in which rotatable fan is mounted, and a motor (M) for driving the rotatable fan. The motor (M) is mounted at a first side of the part (P), and an elastic suspension (S) is mounted at a second side, opposite to the first side, of the part (P), for coupling a fan inlet or outlet (I/O) to the housing (H). A clamp mechanism (C) is provided for pressing the fan aggregate towards the housing (H) at the second side of the part (P). The clamp mechanism (C) may comprise a spring, e.g. a wire spring that is clamped via lock-in features to the housing (H). Preferably, a resonant frequency of the clamp mechanism (C) does not coincide with the resonant rotational frequencies of the fan aggregate. Preferably, the clamp mechanism (C) is arranged for pressing the part (P) towards the housing (H). Preferably, the clamp mechanism (C) comprises at least 2 and preferably 3 clamps at equidistant positions around the part (P). Preferably, a spring constant of the clamp mechanism (C) in an axial direction of a rotation axis of the motor (M) is smaller than a spring constant of the elastic suspension (S).

## Description

### FIELD OF THE INVENTION

The invention relates to a fan aggregate suspension, and in particular to a housing (e.g. a vacuum cleaner) provided with a fan aggregate.

### BACKGROUND OF THE INVENTION

EP2408345 discloses a vacuum cleaner comprising a housing being separated in at least a dust compartment and a motor compartment. The vacuum cleaner also comprises a motor located in the motor compartment, and an air guide between the dust compartment and the motor. The motor is suspended in the motor compartment by a suspension system comprising at least one spring.

In another prior art fan aggregate suspension, the fan aggregate is mounted to the housing by an elastic ring around a fan inlet / outlet, and by elastic coupling blocks at a motor side of the fan aggregate. It appears that vibration forces result in a lot of undesired noise.

### SUMMARY OF THE INVENTION

It is, inter alia, an object of the invention to provide an improved fan aggregate suspension. The invention is defined by the independent claims. Advantageous embodiments are defined in the dependent claims.

According to one aspect of the invention, a housing (e.g. a vacuum cleaner) comprises a fan aggregate having a part in which rotatable fan is mounted, and a motor for driving the rotatable fan. The motor is mounted at a first side of the part, and an elastic suspension is mounted at a second side, opposite to the first side, of the part, for coupling a fan inlet or outlet to the housing. A clamp mechanism is provided for pressing the fan aggregate towards the housing at the second side of the part. The clamp mechanism may comprise a spring, e.g. a wire spring that is clamped via lock-in features to the housing. Preferably, a resonant frequency of the clamp mechanism does not coincide with the resonant rotational frequencies of the fan aggregate. Preferably, the clamp mechanism is arranged for pressing the part towards the housing. Preferably, the clamp mechanism comprises at least 2 and preferably 3 clamps at equidistant positions around the part. Preferably, a spring constant of the clamp mechanism in an axial direction of a rotation axis of the motor is smaller than a spring constant of the elastic suspension. A device (e.g. a vacuum cleaner) provided with such a fan aggregate suspension will produce less noise.

These and other aspects of the invention will be apparent from and elucidated with reference to the embodiments described hereinafter.

### BRIEF DESCRIPTION OF THE DRAWINGS

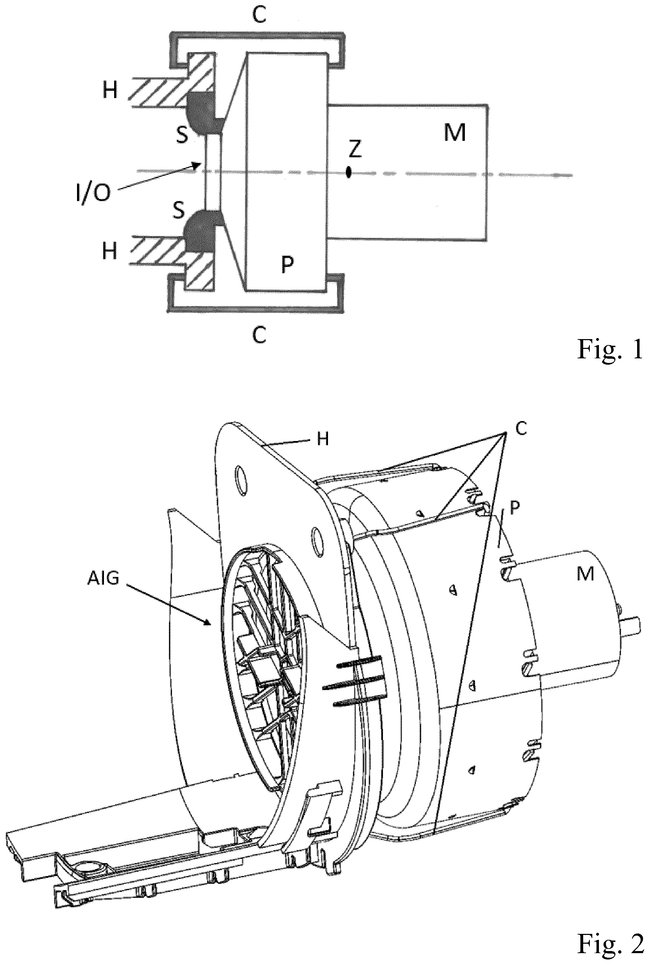

Figs. 1-3 show an embodiment of a fan aggregate suspension in accordance with the present invention.

### DESCRIPTION OF EMBODIMENTS

Fig. 1 shows an embodiment of a fan aggregate suspension in accordance with the present invention. A housing H comprises a fan aggregate having a part P in which rotatable fan is mounted, and a motor M for driving the rotatable fan, the motor M being mounted at a first side of the part P. An elastic suspension S at a second side, opposite to the first side, of the part P couples a fan inlet or outlet I/O to the housing H. A clamp mechanism C presses the part P towards the housing H. The elastic suspension S may be a viscoelastic suspension component like a rubber ring.

By removing the suspension parts at the motor side of the fan aggregate, as were shown by EP2408345, vibration forces cannot be transferred to the housing via that side. Radial vibration forces at the motor side of the aggregate are now converted to a rotational movement of the aggregate around its center of mass Z. Hence a crucial element of the new suspension is to have (visco)elastic suspension components on one side of the fan aggregate in combination with a solid material component on that same side, such as a spring or a clamp mechanism C to press the fan aggregate towards the housing H. In a preferred embodiment, a wire spring is used that is clamped via lock-in features at the outside housing. The spring is preferably designed in such a way that the resonant frequency of the spring is outside the resonant rotational frequencies of the fan aggregate.

All springs/clamps of the clamp mechanism C together should have a spring constant k(C) (in the axial clamping direction) that does not exceed the spring constant k(S) of the suspension S by a factor of 10. Preferably one would like to aim for a similar spring constant values. Or even better, k(C) << k(S). In this last case, the dominant part of the vibrations is transmitted via the suspension S to the housing, while the vibration transmission via clamp mechanism C would then be negligible. In contrast, if k(C) >> k(S), vibrations are mainly transmitted from the part P to the housing H via the clamp mechanism C, similar to almost rigid connection, which would render the suspension function useless.

As shown in Fig. 1, the fan aggregate is suspended to the housing H by means of the elastic suspension S and also by means of the clamp mechanism C. For a good and stable suspension, it is advantageous if the part of the housing H to which the fan aggregate is suspended, is well-connected to other parts of the housing H and forms a relatively large mass that represents the fixed world.

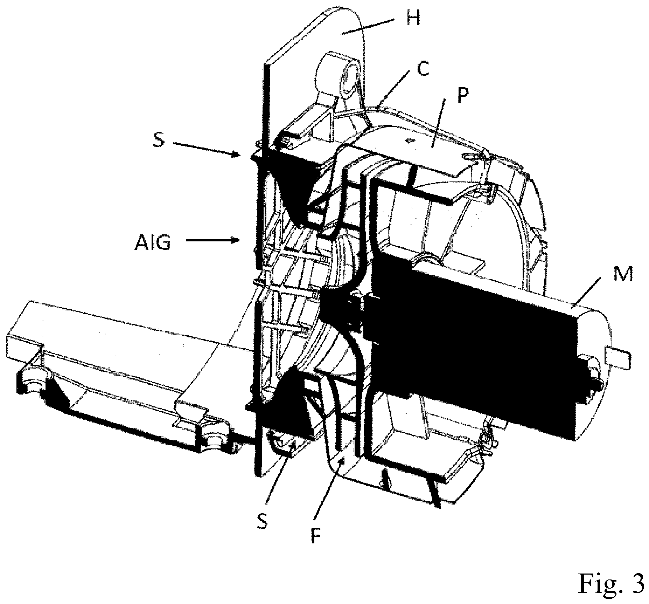

Figs. 2 and 3 show a side-view and a cross-section of the embodiment of the fan aggregate suspension in accordance with the present invention, as used in a vacuum cleaner. They illustrate that the part of the housing H to which the fan aggregate is suspended, is well connected to other parts of the housing H. Upstream of the air flow, there is an air inlet grid AIG before the air inlet of the fan. As shown in the cross-section of Fig. 3, inside the part P there is the rotatable fan F that is driven by the motor M. The motor M is mounted at a first side of the part P, i.e. the motor M is mounted to the part P and extends from one side thereof. Fig. 3 further shows a ribbed structure of the plate in which the air inlet grill AIG is mounted, which ribbed structure creates rigidity in the housing H and connects it to other housing components, resulting in additional rigidity and coupling masses that results in a good and stable fan aggregate suspension that will result in that less noise is produced.

It should be noted that the above-mentioned embodiments illustrate rather than limit the invention, and that those skilled in the art will be able to design many alternative embodiments without departing from the scope of the appended claims. In one alternative embodiment, the side of the clamp C that is not attached to the housing H, is not attached to the part P but to the motor M, near the center of gravity Z. There may be more than 2 clamps C distributed around the part P at equidistant positions; having 3 clamps as shown in Fig. 2 is preferred as providing a most stable situation without being over-dimensioned.

The elastic suspension S may include any type of spring (or combination with spring), like a helicoidal, wire, blade spring, etc. to suspend the air inlet part of the fan aggregate to the housing H. In case of a vacuum cleaner aggregate it is important that there is also a sealing function between the housing H and the part P, like the air guide described in EP2408345. That prior art air guide itself is too flexible to serve as elastic suspension in the framework of the present invention. However, a viscoelastic suspension like a rubber ring would suffice to act both as a spring to suspend the fan's air inlet part and as an air seal.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. Measures recited in mutually different dependent claims may advantageously be used in combination.

## Claims

1. A housing (H) comprising:
a fan aggregate having a part (P) in which rotatable fan (F) is mounted, and a motor (M) for driving the rotatable fan (F), the motor (M) being mounted at a first side of the part (P), an elastic suspension (S) at a second side, opposite to the first side, of the part (P), for coupling a fan inlet or outlet (I/O) to the housing (H); and
a clamp mechanism (C) for pressing the fan aggregate towards the housing (H) at the second side of the part (P).

2. A housing (H) as claimed in claim 1, wherein the clamp mechanism (C) comprises a spring.

3. A housing as claimed in claim 2, wherein the spring is a wire spring that is clamped via lock-in features to the housing (H).

4. A housing as claimed in any of the preceding claims, wherein a resonant frequency of the clamp mechanism (C) does not coincide with the resonant rotational frequencies of the fan aggregate.

5. A housing as claimed in any of the preceding claims, wherein the clamp mechanism (C) is arranged for pressing the part (P) towards the housing (H).

6. A housing as claimed in any of the preceding claims, wherein the clamp mechanism (C) comprises at least 2 and preferably 3 clamps at equidistant positions around the part (P).

7. A housing as claimed in any of the preceding claims, wherein a spring constant of the clamp mechanism (C) in an axial direction of a rotation axis of the motor (M) is smaller than a spring constant of the elastic suspension (S).

8. A housing as claimed in any of the preceding claims, wherein the housing (H) is a vacuum cleaner.
